# EUROPEAN PATENT APPLICATION

(11) **EP 2 584 023 A1**
(43) Date of publication of application: **24.04.2013**
(21) Application number: 11397527.0
(22) Date of filing: 21.10.2011
(51) Int. Cl.: C10J 3/00, C10J 3/46, C10J 3/72, C10J 3/82, C10J 3/84, C10K 3/00, C10G 2/00

(54) **Method of producing a syngas composition**

(71) Applicant: Neste Oil Oyj, 02150 Espoo (FI)
(72) Inventor: Koskinen, Jukka, FI-02160 ESPOO (FI); Holma, Hannu, FI-06101 PORVOO (FI); Johansson, Sebastian, FI-02400 KYRKSLÄTT (FI); Toppinen, Sami, FI-06101 PORVOO (FI); Keskinen, Kari, FI-06101 PORVOO (FI)
(74) Representative: Sundman, Patrik Christoffer

(57) **Abstract**

A method of producing a syngas composition. The method comprises providing a biomass raw-material; feeding the raw-material into a gasification zone, wherein it is gasified by oxygen-blown gasification to produce a syngas composition containing carbon monoxide, carbon dioxide, hydrogen and hydrocarbons along with carbon solids entrained therein; and withdrawing the syngas composition from the gasification zone. According to the invention, the syngas composition withdrawn from the gasification zone is fed into a carbon bed reaction zone; and at least a part of the carbon dioxide is converted into carbon monoxide by a Boudourd reaction. The carbon solids entrained in the syngas can be used as a part of the carbon of the carbon bed where they will take part in the reaction to further increase the conversion of carbon dioxide.

## Description

### Background of the Invention

### Field of the Invention

The present invention relates to processing of gas streams. In particular, the present invention concerns a method according to the preamble of claim 1 of producing a gaseous composition, for example syngas, of a kind which can be used in the production of fuels for combustion engines or for the production of various chemicals and industrial hydrocarbon intermediates.

### Description of Related Art

In a Fischer-Tropsch reactor (in the following also abbreviated FT reactor), hydrogen and carbon monoxide are reacted in the presence of a transition metal catalyst, such as cobalt or iron, to form a composition containing a broad range of linear alkanes. This hydrocarbon composition is useful as an intermediate in the production of many products in the chemical and refining industry and business.

A number of carbonaceous sources have been used as raw-materials for producing a hydrogen and carbon monoxide containing gas (also known as a "syngas") which can be fed into the FT process. Originally, coal was used as the primary raw-material, but lately also natural gas has been taken into use in commercial processes. Even more recently various processes have been developed in which biological materials, such as plant products and plant parts, are gasified and processed to produce a suitable feed. In a further alternative approach, viz. in the BTL process (biomass to liquid process), a biomass comprising whole plants is used as a raw-material. The BTL process allows for the utilization of forestry residues.

Typically, gasification of biomass for producing a syngas takes place in the presence of oxygen. For fuel production by the FT process, it is preferred to use an oxygen-containing gas, particularly oxygen gas, for the gasification in order to attain reasonably high temperatures and to reduce the formation of nitrogenous by-product and to minimize content of inert gases like nitrogen. A typical temperature in the gasification is about 750 to 1200 °C. At these conditions, biomass, such as lignocellulosic materials, will produce a gas containing carbon monoxide, carbon dioxide, hydrogen and water gas. Further it usually contains some hydrocarbons and impurities, such as sulphur and nitrogen compounds and trace metals.

In case of gasification in a low temperature range of about 500-950 °C, typically about 750 to 950 °C, for example about 800 to 900 °C, the product of the gasification will still contain some unreacted hydrocarbons. In order to convert all hydrocarbons to syngas components, the effluent of a gasifier is fed into a reformer, either a thermal reformer or catalytic reformer, wherein the gas is subjected to further thermal reactions which give a syngas product mix containing less by-products.

The gaseous effluent of the reformer has to be freed from carbon dioxide, water, sulphur compounds and any other catalyst poisons before it can be used as a syngas for an FT reaction.

For the purpose of an FT reaction, hydrogen-to-carbon monoxide ratio needs to be increased. In particular, whereas a gasifier produces a gas having a molar ratio of hydrogen to carbon monoxide of about 0.5 to 1.5:1 and reforming only marginally increases the ratio, the Fischer-Tropsch reaction requires that the reactants are present in a higher molar ratio of about 2:1. Therefore, it is necessary to increase said ratio in the gas produced in a conventional gasifier.

It is possible to achieve the latter goal by subjecting the gas to a water gas shift (WGS) reaction, in which hydrogen is produced by reacting the carbon monoxide with water to produce carbon dioxide and hydrogen. However, this reaction is disadvantageous in the sense that it will also increase the concentration of carbon dioxide by sacrificing some of the desired carbon monoxide. Before the FT reactor, the concentration of carbon dioxide has to be reduced to a level which is rather low, typically below 3 mol-%. The amount of carbon dioxide which has to be removed from the syngas is therefore significant, and it corresponds to about 50 % of the total gasification capacity of the whole process. In other words, approximately half of the carbon content in the gas produced in the gasification of the biomass can be utilized for production of hydrocarbons by the FT process.

Syngas containing hydrogen and carbon monoxide can also be used for the production of other chemical compositions and compounds than the FT products.

One example of an application is the methanol synthesis wherein carbon monoxide and hydrogen are reacted in the presence of a metal catalyst at increased temperature and pressure to produce methanol with high selectivity.

Another example of an application for the syngas is the hydroformylation process, also known as the oxo synthesis, for the production of aldehydes from alkenes, wherein hydrogen and carbon monoxide are added across a carbon-carbon double bond of an alkene to produce linear or branched aldehydes having one more carbon atom than the original compound. The reaction takes place, typically, in the presence of a rhodium or cobalt catalyst at high pressures and elevated temperatures.

For the syngas obtained from gasification of a carbonaceous source, in particular biomass, to be useful in the above applications as well in other where the carbon monoxide and hydrogen can be used jointly or separately, it is desirable to increase the CO and H₂ content, while reducing the proportion of carbon dioxide which generally is an inert component and in some instances, as explained above, even detrimental to the use of the syngas in subsequent chemical reactions.

Based on the above, there is a need for a method of processing syngas in such a way that a considerable part of the carbon dioxide can be converted into carbon monoxide while avoiding undue increase in the energy consumption of the process.

### Summary of the Invention

It is an aim of the present invention to eliminate at least a part of the problems related to the art and to provide a novel method of providing syngas compositions by gasification of biomass, which syngas compositions are useful for various chemical reactions wherein hydrogen and carbon monoxide are employed for producing industrially interesting products.

The invention is based on the concept of converting at least a part of the carbon dioxide contained in syngas obtained from low-temperature gasification of biomass - either in the raw syngas obtained from gasification as such or in syngas after a reforming step - into carbon monoxide in a carbon bed reactor. In the reactor, carbon dioxide is subjected to the Boudouard reaction together with carbon, whereby the components are converted into carbon monoxide.

In this way, the production rate, calculated based on the total carbon fed into the process, can be significantly increased and a syngas composition produced with contains more carbon monoxide than otherwise obtainable without the use of, for example, a water gas shift reaction which would generate more carbon dioxide.

More specifically, the present invention is characterized by what is stated in the characterizing part of claim 1.

Considerable advantages are obtainable by the present invention. Thus, preliminary calculations show that it is possible to increase the capacity of the syngas process, in particular when combined with the Fischer-Tropsch synthesis, with up to 30 to 40 %, calculated from the carbon feed. The process is a carbon dioxide "sink" which will utilize a part of or, if so desired, all of the carbon in the production of hydrocarbons which means that the "carbon dioxide footprint" will be highly advantageous for the process.

In one embodiment of the invention, the carbon bed reactor is combined with reforming of raw syngas and by carrying out the reforming at sufficiently high temperature tarry compounds and hydrocarbons can efficiently be converted to carbon monoxide and, simultaneously, the need for separate equipment for removing naphthalenes and benzene will be eliminated.

The present invention will reduce the need for gas washing and gas processing which leads to simplifications of process configuration and, for example the requirements on compressors and equipment for removing carbon dioxide will be reduced as will the operation and investment costs.

At low temperature gasification, the raw syngas will also contain entrained carbon solids, e.g. carbon particles or agglomerates. The carbon material can be utilized in various ways. In one particularly interesting embodiment, the carbon solids entrained in the syngas of the gasifier and withdrawn from the gasifier together with the syngas are conducted to the carbon bed reactor where they will take part in the Boudourd reaction to further increase the conversion of carbon dioxide.

Next, the invention will be examined in more detail with the aid of a detailed description with reference to the attached drawings.

### Brief Description of the Drawings

Figure 1 shows schematically a first process configuration for carrying out an embodiment of the invention; and
Figure 2 shows schematically a second process configuration for carrying out an embodiment of the invention.

### Detailed Description of Preferred Embodiments

As mentioned above, the present technology relates to a method of providing gas compositions containing carbon monoxide and carbon dioxide, and for processing the gas compositions to efficiently increase their carbon monoxide concentration in a carbon bed reaction zone.

It is known in the art that carbon dioxide is reduced in the presence of carbon by an endothermic reaction known as the Boudouard reaction to yield carbon monoxide (cf. for example WO 2009/020442). In US Patent No. 6565824 the same reaction is used for producing carbon monoxide from carbon dioxide by reduction using carbon obtained from pyrolysis of biomass.

None of the references discloses the application of the Boudouard reaction to downstream processing of syngas of biomass gasification in combination with a reforming step for removing tarry compounds. Nor is the operation of the gasification at relatively low temperature followed by reforming at a higher temperature range in combination with (either before or after reforming) of a carbon bed reactor operated at a broad temperature range known in the art.

Basically, the feed of the carbon bed reaction zone employed in the present technology can be selected from a number of sources, broadly covering the group of carbon dioxide gas as such and gas streams containing carbon dioxide - for example gaseous effluents of a water gas shift reaction; syngas obtained directly from gasification; syngas which has been reformed; or a combined gas stream comprising syngas and an industrial gas stream formed by carbon dioxide. Thus, it is possible to combine the carbon dioxide directly obtained from gasification with any carbon dioxide containing stream, produced by a process associated with or carried out in conjunction with the process chain for producing and treating syngas.

In the following, the present technology will be described with particular reference to the processing of syngas obtained by gasification of biomass and intended for hydrocarbon synthesis. However, as evident from the above, and as will be discussed later, the present technology can also be applied to processing of syngas which is used for a variety of other uses and applications.

Two simplified process configurations are shown in the attached drawings, in which the gasification unit has been given the reference numerals 1 and 13.

Gasification of biomass can be carried out, for example in the presence of oxygen, at a temperature generally in the range of about 500 to 1200 °C. In the present context, gasification of the raw-material is typically carried out in the form of low-temperature gasification. Thus, the raw-material is gasified at a temperature of maximum 950 °C, for example at about 500 to 950 °C, for example at 750 to 900 °C.

By gasification a syngas is produced, containing as main components carbon monoxide, carbon dioxide, hydrogen and hydrocarbons and possibly inert components and impurities.

Preferably, the gasification is performed as "oxygen-blown" gasification, which means that the organic raw-material is gasified in the presence of oxygen which may come along the raw-material or, preferably separately fed.

Thus, in preferred embodiment, gasification is promoted by separately feeding steam, air or oxygen into the reactor, particularly advantageous results being obtained with oxygen and oxygen in combination with steam.

Depending on the biomass and the temperature and on the concentration of oxygen, the carbon conversion, i.e. conversion of elemental carbon contained in the raw-material into light compounds, hydrocarbons and tar, is higher than 70 %, preferably higher than 75 %, in particular in excess of 80 % by weight of the carbon in the raw-material.

The feedstock of the process is an organic raw-material preferably composed of biological matter, i.e. of a matter of vegetable origin. In the present context, the term "biomass" will be used for designating any such raw-material.

A typical feature of the feedstock materials used herein is that they contain carbon, in particular in excess of about 20 %, preferably in excess of about 30 %, advantageously in excess of about 40 % by dry matter. The biomass feedstock is preferably selected from annual or perennial plants and parts and residues thereof, such as wood, wood chips and particles (saw dust etc), forestry residues and thinnings; agricultural residues, such as straw, olive thinnings; energy crops, such as willow, energy hay, *Miscanthous;* and peat. However, it is also possible to use various waste materials, such as refuse derived fuel (RDF); wastes from sawmills, plywood, furniture, demolished wood and other mechanical forestry wastes; and waste slurries (including industrial and municipal wastes). Also microorganism residues and wastes are available as biomass feedstock. In addition to said materials, various fats and waxes can be used.

The biomass is generally gasified in a fluidized bed reactor or a circulating fluidized bed reactor (CFB) gasifier.

The circulating bed is formed by a granular or particulate bed material, such as alumina-silicate (e.g. sand) or a similar inorganic material. CaO, which can be obtained by introducing Ca carbonate into the gasification reactor, is used as a catalyst for the decomposition of tars in the gasification.

The biomass can be in the form of particles, granules or chips or similar coarse or finely divided parts. According to one embodiment, the biomass can be used roughly as such as harvested. According to another embodiment, the biomass is milled or grinded to an average particle or granule size of less than about 50 mm, preferably less than about 40 mm, in particular about 25 to not more than 1 mm before gasification. The biomass can also be fed into the gasifier in the form of a liquid stream, e.g. a liquid stream obtained by pyrolysis of biomass. Such pyrolysis products include charcoal and tars.

In the case of solid biomass, it is typically fed into the reactor with a moisture content of less than 30 % by weight, preferably less than 25 % by weight, for example about 5 to 20 % by weight.

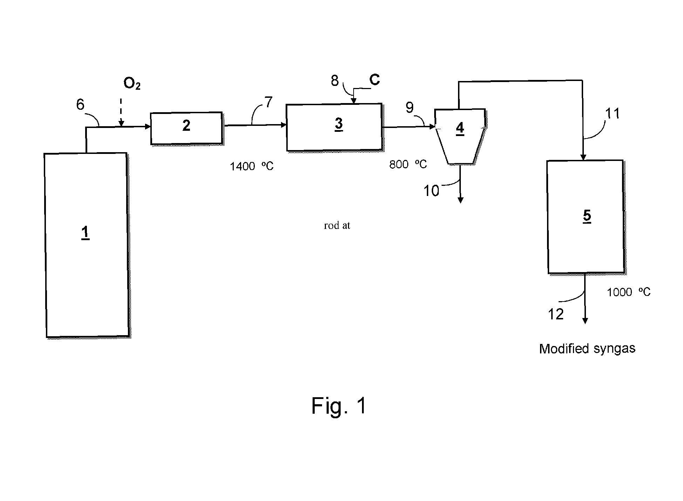

By the above-disclosed gasification, a gas (given in Figure 1 the reference numeral 6) containing carbon monoxide, hydrogen and carbon dioxide as main components along with hydrocarbons and possibly together with inert components, and tarry compounds and some inorganic impurities, including metal particles will be obtained. Said gas is withdrawn from the gasifier.

Further, the gas will contain carbon solids entrained in the gas stream 6. The solids can be present as particles or granules. The size of the particles is generally in the range from about 0.01 to 1000 um, in particular about 0.1 to 100 um, for example about 0.5 to 10 um. The granules, comprising for example agglomerated particles, have a size in the range of about 0.1 to 5 mm, in particular about 1 to 1000 um.

The content of the carbon particles is not insignificant. It fact, as much as 1 to 40 mol-%, in particular 5 to 30 mol-%, of the carbon content in the biomass or other carboneous raw-material may be present in the form of carbon particles or granules after gasification at the low-temperature conditions described above. Preferably gasification is carried out such that these carbon particles are entrained in the gas flow emanating from the gasifier. The carbon particles can be efficiently utilized in a Boudouard reaction for converting carbon dioxide into carbon monoxide.

In a preferred embodiment of the present technology, all or at least essentially all the syngas produced during gasification is withdrawn together with all or at least essentially all the carbon particles or granules produced during gasification.

The temperature of the gaseous composition 6, 17 withdrawn from the gasification units 1, 13 is typically in the range of about 500 to 950, in particular 750 to 900 °C.

The gaseous composition of the gasification, containing said entrained carbon solids in the form of particles or granules or other solid carboneous matter (matter containing elemental carbon), is subjected to further treatment.

Depending on the gasifier and the biomass raw-material, the withdrawn gas streams 6, 17 will also contain some inert components and metal compounds. The inert components are typically represented by siliceous residues stemming from the biomass or from any bed material of the gasification reactor or a combination of both. Typically there are also sulphurous residues which are toxic to any catalysts. These will not be considered below in further detail, but with regard to various ways of removing them from the gas reference is made to co-pending EP Patent Application No. 11153704.9, titled "Method of purifying a gas", the contents of which are herewith incorporated by reference.

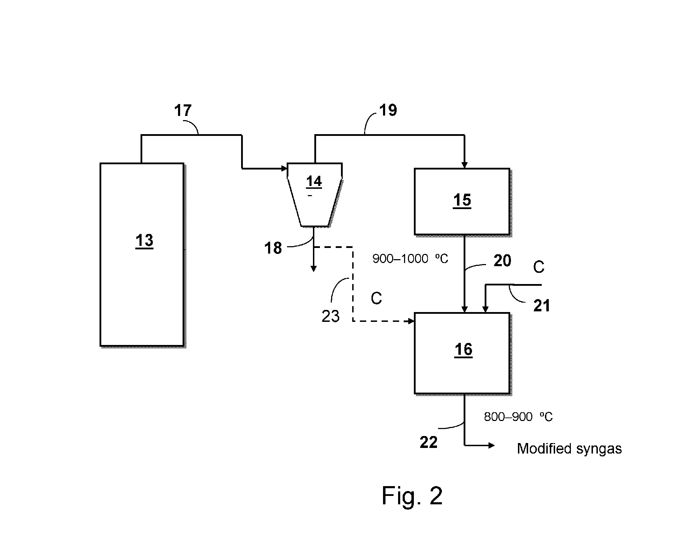

Figures 1 and 2 show two different embodiments of the present technology for the further treatment of the gasifier effluent, in which a) the carbon solids are either conducted together with the gaseous components of the gasifier effluent 6 in one gas flow, in particular in entirety, to a carbon bed reactor (Figure 1), or b) all or essentially all the solids are separated from the gasifier effluent 17 and separately conducted to a carbon bed reactor (stream 23 in Figure 2).

In both alternatives, the hydrocarbons present in the gaseous effluent are preferably at least partially reformed to decompose the hydrocarbons before the gas is fed into the carbon bed reaction zone.

In Figure 1, a first embodiment of the present technology is shown. In the embodiment the gaseous effluent is conducted to a thermal treatment unit 2. In the unit the temperature of the carbon dioxide containing gas is increased to a range of about 1400 to 1600 °C before feeding the gas into a carbon bed reaction zone 3. The increase of the temperature can be achieved, for example by oxygen combustion or by indirect heating.

During the thermal treatment a significant part of hydrocarbons present in the gaseous effluent are decomposed to form further carbon oxides. Examples of such hydrocarbons include tar and light hydrocarbons, such as ethylene and butadiene.

The thermal treatment unit can be comprised of one reactor or a cascade of several reactors operated at the same or different conditions.

Oxygen, if any, is fed into the gas before the thermal treatment unit 2 or the gas is fed directly into the treatment unit. Oxygen can used as such (i.e. as a pure gas having an oxygen content of more than 98 vol-%, in particular more than 99.5 vol-%) or as a gas mixture containing other gases along with the oxygen, such as nitrogen or water steam, in a concentration of 10 to 100 vol-% of the total gas. Oxygen is fed only the amount required to rise the temperature up to desired value, e.g. 1400 °C.

Oxygen can be fed before or into each thermal unit or it can be fed merely before the first thermal unit.

After the thermal treatment the gas 7 which still contains at least some carbon solids and possibly other solids will be conducted to a carbon bed reactor 3.

In the reactor 3, carbon dioxide is converted into carbon monoxide in the presence of H₂O based on the following reactions:

C + CO₂ → 2 CO

C + H₂O → CO + H₂

The Boudourd reaction is endothermic.

The Boudouard reaction is carried out at a temperature in the range of about 950 to 1600 °C in the present technology. In the embodiment of Figure 1, the temperature of the reaction will drop from about 1400 °C at the inlet to about 800 °C at the outlet.

Typically, the carbon bed reaction zone 3 comprises a reactor which has a reaction bed formed by carbon 8. The carbon material can be separately fed into reactor 3, as shown in Figure 1, or it can be mixed with the gaseous feed. As mentioned above, the gas stream 6, 7 contains entrained solids of elemental carbon which is used for complementing the bed material (bed proper) of the carbon bed reactor. The carbon entrained in the gasification effluent 6, 7 may form 0.1 to 100 m-% of the bed proper of the carbon bed. Typically, it forms about 1 to 50 m-%.

For the sake of order it should be pointed out that although the carbon bed reactor 3 is depicted as comprising only one unit, it is possible to provide for a reaction zone comprising a plurality of carbon bed reactors in a cascade. Naturally, there can also be reactors in parallel configuration to allow for service of the reactor units without interrupting operation of the process.

Generally, in the present technology, the carbon bed reactor can be of any conventional type, including reactors wherein the carbon bed is present in horizontal or vertical orientation. The reactor is typically of cylindrical configuration.

The carbon material can be monolithic although it is preferred to use carbon particles in the form of granulates or powder which are capable of flowing such as to allow for constant feed of carbon material into the reactor.

In one embodiment, the carbon bed reaction zone 3 comprises a moving bed, for example a bubbling bed reactor, a fluidized bed reactor or a circulating fluidized bed reactor (CFB).

Although reactors with a "moving bed" are preferred, fixed bed reactors can also be used.

In one embodiment, the carbon of the carbon bed reaction zone 3 is derived from non-fossil raw-material. Thus, it can be derived from biomass, such as annual or perennial plants, in particular from wood, including woody materials of the kind disclosed above for use in gasification. Charcoal from a pyrolysis reaction is another source of carbon material. An interesting process of obtaining a suitable reactor bed material is by the torrefaction reaction. The torrefaction is typically a mild pyrolysis reaction in which biomass is treated at increased temperature (e.g. 200 to 300 °C) under atmospheric conditions and in the absence of oxygen. The material thus obtained will contain a significant part of the main biopolymer constituents of the biomass, such as cellulose, hemicelluloses along with degradation products, such as mono- and oligosaccharides, and volatile compounds.

As explained above, in a preferred embodiment, at least a part of the carbon is formed by the carbon solids entrained in the gasifier effluent as shown in the embodiment of Figure 1.

In the reactor a considerable part of the carbon dioxide is converted into carbon monoxide by the Boudouard reaction, as referred to above. Typically, an aim is to convert at least 10 vol-%, preferably 15 to 100 vol-%, of the carbon dioxide of the syngas to carbon monoxide. As a result, the carbon dioxide content of the gas fed into the carbon bed reaction zone is reduced by at least 5 %, preferably by at least 7 %, in particular by 10 % by volume or more.

A carbon monoxide containing gas 9 is withdrawn from the carbon bed reaction zone typically at a temperature of about 750 to 900 °C.

The effluent can conducted to a separation unit 4 for removing remaining fines and solids 10. The overhead of the separation unit 4 is then conducted as a gas stream 11 to an optional catalytic reformation unit 5. The operation of the separation unit 4 and the catalytic reformation unit 5 is discussed in more detail in connection with the embodiment of Figure 2 (units 14 and 15) to which reference is herewith made.

Turning therefore to the embodiment of Figure 2, it can be noted that the effluent 17 of the gasifier 13 is conducted to further processing formed by a cascade of a) separation means, b) at least one reformation unit and c) at least a carbon bed reaction unit (units 14 to 16 in the drawing), in that order.

The first unit after the gasifier 13 is a unit 14 for separation of solids from the gas stream. Such a separation means may comprise a mechanical filtering device or a cyclone, as discussed above.

Reference number 18 depicts the solids removed from the processing stream and number 19 depicts the gas effluent. The bottom fraction 18 of the separation unit will also contain carbon solids entrained in the gasifier gas. When these are to be used in the carbon bed reactor 16, they have to be separated from stream 18 which can be achieved for example by classification. The carbon solids stream 23 can then be conducted to the carbon bed reactor or it can be combined with the overhead stream 19 of the separation means 14 or to the effluent 20 of the reforming unit 15.

In the following stage of the process, the gaseous effluent is conducted to catalytic reforming 15 in which organic impurities (tar and light hydrocarbons, such as ethylene and butadiene) contained in the gasification gas are decomposed in a catalytic reformer at a temperature of approximately 500 to 1000 °C, and in the presence of a precious metal catalyst.

Although the reforming has been depicted with only one box in the drawing, the reforming reactions can be carried out in a multi-stage reforming process comprising, in a cascade, several catalytic reforming zones operated at the same or different conditions.

During operation, an oxidizing agent, such as oxygen gas, is typically mixed with the feed to the reforming zone, although not separately shown in the attached drawing. In addition, an oxidizing agent, such as oxygen gas, optionally in combination with steam, is typically fed into the reforming unit(s).

Based on the above, in one embodiment, the reforming is carried out in a reforming zone comprising 1 to 5 catalyst zones, the temperature of the last catalyst zone being about 850 to 1000 °C which is equal to the temperature of the gaseous effluent conducted to further treatment.

As mentioned above, the reforming unit 5 of Figure 1 can be similar to or identical with the reforming unit 15.

The gaseous effluent of the reforming is recovered and conducted to the carbon bed reaction zone 16. The reaction zone 16 is similar to the one discussed above in connection with the embodiment of Figure 1.

Similarly, a carbon monoxide containing gas 22 is withdrawn from the carbon bed reaction zone typically at a temperature of about 750 to 900 °C.

In one embodiment, further carbon dioxide is fed into the effluent before the carbon bed reactor 16. Thus, in that embodiment, the feed of the carbon bed reactor comprises the gaseous effluent of a reforming step combined with a stream primarily containing carbon dioxide, in particular carbon dioxide produced by a process associated with the present industrial process for producing syngas. Such a process is exemplified by the water gas shift reaction for producing hydrogen from water and carbon monoxide which reaction also gives rise to carbon dioxide.

In both embodiments discussed above with reference to Figures 1 and 2, the effluents 9/12 and 22, respectively, of the Boudourd reaction units will comprise gas streams enriched with carbon monoxide and depleted in carbon dioxide. Hydrogen present in the feed will not take part in the reaction in the reactors 3, 16. The effluent will therefore have an increased concentration of carbon monoxide.

The effluent of the reactor cascade according to the present technology is denoted "modified syngas" in Figures 1 and 2.

As discussed above, the use of the syngas is particularly interesting in processes for producing hydrocarbon compositions. The Fischer-Tropsch process requires typically a ratio for H₂-to-CO of about 1.8 to 2.3.

The water gas shift reaction is typically used for increasing the concentration of hydrogen, which means that some of the valuable carbon monoxide will be sacrificed at the cost of producing more carbon dioxide. However, in the present technology carbon dioxide obtained from, for example WGS reactor, can be converted into carbon monoxide. Thus, in one embodiment, at least some of the carbon dioxide gas fed into the carbon bed reaction zone is derived from a water gas shift reaction.

The present technology comprises a further embodiment for adjusting the hydrogen-to carbon monoxide ratio, viz. the introduction of external hydrogen.

The recovered carbon dioxide can be used for forming carbon monoxide. According to one embodiment, at least a part of the carbon dioxide is used for forming carbon monoxide by a reversed water gas shift reaction by use of external hydrogen. The external hydrogen can be incorporated as such in the modified syngas. The external hydrogen can also be used for further reduce the content of carbon dioxide, for example by the application of the reversed water gas shift reaction, wherein carbon dioxide and hydrogen are reacted to form carbon monoxide and water. The reaction can be carried out at a temperature generally in the range of about 500 to 1000 °C. In particular the reversed water gas shift reaction can be carried out at a temperature of about 700 to 900 °C. Such conditions will favour the reaction of carbon dioxide and hydrogen. The reactions are endothermic which means that the temperature of an adiabatic reactor will drop with about 130 °C during operation. Suitable catalysts are iron and nickel metal catalysts to mention a few.

Generally the ratio of external hydrogen to carbon dioxide is 0.5:1 1 to 6:1, in particular 0.9:1 to 4:1.

The external hydrogen gas can be obtained from, for example, natural gas, or a source of light hydrocarbons, in particular methane, such as landfill gas, biogas, hydrogen produced by bioelectricity (i.e. electricity produced by use of renewable energy resources) and methane hydrate are also possible.

Generally, any external hydrogen source which comprises hydrogen produced by electricity in particular without emission of carbon dioxide and other greenhouse gases is particularly interesting.

It should be pointed out that during electrolytic production of hydrogen, considerable volumes of oxygen gas of high purity are obtained. This oxygen can be employed in the gasification of the biomass and in reformation of the gasification effluent.

Depending on the desired composition of the hydrogen feed gas, the source of methane and other light hydrocarbons can also be subjected to reformation optionally in combination with a shift reaction.

Natural gas is a very clean source of methane. It typically contains up to 98 vol-% methane or even more, the balance being formed by ethylene and C₃ and C₄ alkanes. As a feed for clean gas catalytic reformation (i.e. catalytic reformation essentially in the absence of catalyst poisons such as particles and sulphide and amine compounds) natural gas is highly suitable.

By using external hydrogen feed, the capacity (i.e. the production rate) of a biomass gasification process can be increased with at least about 40 %. In such an embodiment, there is no need for a conventional Water Gas Shift (WGS) reactor for producing hydrogen from carbon monoxide and steam. When producing CO by the reverse WGS reaction, the capacity of the process is increased at maximum by 160 %. Both embodiments will naturally reduce investment costs by either eliminating the need for a separate Water Gas Shift reactor or greatly reducing the size of the equipment. Thus, the use of external hydrogen will enhance the chemical bounding of green carbon into the product instead of forming CO₂ which is exhausted into atmosphere. This decreases CO₂ emissions of the whole process compared to a conventional FT process for the production of hydrocarbon from syngas obtained by gasification ofbiomas. The reduction of carbon dioxide emission can be on the order of 5 to 90 %, in particular about 10 to 80 % based on volume.

The use of external hydrogen gas is disclosed in co-pending PCT Patent Application No. PCT/FI2011/050430, titled "Method of producing a hydrocarbon composition", the contents of which are herewith incorporated by reference.

Utilizing the present technology, comprising in one embodiment, a combination of gasification of biomass, reforming, carbon bed reaction with water gas shift or, alternatively, introduction of external hydrogen, a suitable purified syngas composition ("modified syngas") is produced for feeding into a Fischer-Tropsch reactor.

Thus, that embodiment comprises the following steps for the modified syngas compositions produced by carbon bed reactors 3, 16:
- increasing the hydrogen-to-carbon monoxide molar ratio of the syngas to about 2;
- feeding the gas thus obtained into a Fischer-Tropsch reaction zone; and
- converting in the Fischer-Tropsch reactor at least a significant part of the carbon monoxide and hydrogen contained in the syngas into a hydrocarbon composition containing C₄-C₉₀ hydrocarbons.

Further, in one embodiment, the effluent gas of the gasifier is removed from the gasifier at a temperature suitable for directly subjecting the carbon dioxide contained therein to a Boudourd reaction. Thus, in this embodiment, the gasification and the Boudourd reaction zone form, in practice, an uninterrupted reaction zone, wherein there is suitably an intermittent feed of carbon material downstream of gasification.

For the sake of completeness it can be noted that, in the present technology, it is preferred to feed at least a considerable part, or even more preferably essentially all, of the total raw syngas produced by gasification of carboneous raw-material into a carbon bed reactor/reaction zone. In practice, 50 to 100 vol-%, in particular 70 to 100 vol-%, preferably 90 to 100 vol-% of the syngas is fed to the carbon bed reaction zone. A part of the syngas can however be conducted to other applications or even recycled to gasification.

In addition to the use in a Fischer-Tropsch-reaction, the modified syngas can also be used for methanol synthesis or in hydroformylation.

Optionally, it is naturally possible to use the syngas treated as discussed above for several purposes, i.e. both in an FT process and, simultaneously for production of methanol or in hydroformylation or in combinations thereof.

The particular advantages of the invention include an increase in the yield of synthesis gas, energy efficiency and conversion of the thermal energy of the gas into chemical energy.

The increased energy efficiency is witnessed by the example given below wherein the heating value (LHV) of the synthesis gas increased in the carbon bed reactor from a value of 6.0 MJ/kg to 6.6 MJ/kg by adding carbon 200 kmol/h. The increase in the overall heating value of the gas stream was over 30 MW whereas the heating values of the added carbon only accounts for slightly more the 21 MW

By feeding carbon into the effluent of the reformer so as to lower the temperature to about 800 °C will reduce the CO₂ concentration with 11 % and correspondingly increase the CO concentration.

When the carbon monoxide thus produced is subjected to a WGS reaction for producing a suitable gas stream for feeding to a FT process, i.e. a gas stream having a H₂:CO molar ratio of 2, the result is that the gas temperature has dropped with 74 °C. The CO concentration has increased with 8 % and the CO₂ concentration increased with 4 % (i.e. in relation to the CO concentration, the CO₂ concentration has been reduced).

In this way about 7 MW of the heat energy content of the gas can be converted and the yield is increased with about 2 to 3 %. In addition, the heat content of the carbon used in the Boudouard reaction can be utilized which means that the total capacity is increased with about 10 % whereas potential carbon dioxide emissions will not increase with more than 4 %.

The following non-limiting example illustrates the invention:

### Example 1

This example relates to the application of the present technology to the adjustment of the H₂:CO molar ratio of the syngas with particular reference to the subsequent application to Fischer-Tropsch synthesis.

Upstream of the FT reactor, typically a water-gas-shift (WGS) reaction is carried out in a corresponding reactor, whereby CO reacts with steam for producing hydrogen according to the following equation:

CO + H₂O <-> CO₂ + H₂

Incorporation of carbon bed reaction zone before the WGS reactor can significantly increase the yield of the overall process, as illustrated in Table 1 below.

The first column gives the composition of the raw gas (reformer effluent). The second column describes the outlet of a system where the gas first reacts with 200 kmol/h of carbon in a carbon bed reactor and after that the H₂:CO molar ratio is adjusted to 2.0 in a WGS reactor. The last column presents corresponding values without the carbon bed reactor.

**Table 1. Gas composition**

| | | Raw gas | Carbon reactor | Only WGS |
|---|---|---|---|---|
| Dry gas composition | | | | |
| CO | mol-% | 30.0 | 22.0 | 21.5 |
| CO₂ | mol-% | 28.0 | 31.4 | 32.7 |
| H₂ | mol-% | 39.0 | 44.0 | 43.0 |
| CH₄ | mol-% | 3.0 | 2.6 | 2.8 |
| Dry gas | kmol/h | 5 600 | 6459 | 5992 |
| Steam | kmol/h | 2 400 | 1 741 | 2008 |
| H₂:CO molar ratio | | 1.3 | 2.0 | 2.0 |

As will appear, the use of a carbon bed reactor increases the yield of the product (CO and H₂) with 10.4 %. At the same time, the amount of CO₂ increases only 3.4 %.

## Claims

1. A method of producing a syngas composition, comprising the steps of
- providing a biomass raw-material;
- feeding the raw-material into a gasification zone, wherein it is gasified by oxygen-blown gasification to produce a syngas composition containing carbon monoxide, carbon dioxide, hydrogen and hydrocarbons along with carbon solids entrained therein; and
- withdrawing the syngas composition from the gasification zone;
**characterized by**
- feeding the syngas composition withdrawn from the gasification zone into a carbon bed reaction zone; and
- converting at least a part of the carbon dioxide of the syngas composition into carbon monoxide.

2. The method according to claim 1, comprising reforming the syngas composition in order to decompose organic impurities contained therein before feeding it into a carbon bed reaction zone, said reforming preferably being carried out thermally or catalytically or by a combination thereof.

3. The method according to claim 2, wherein the feed comprises the gaseous effluent of a reforming step combined with a stream primarily containing carbon dioxide, produced by a process associated with or carried out in conjunction with the process chain for producing and treating syngas.

4. The method according to claim 2 or 3, wherein the reforming is carried out in a reforming zone comprising 1 to 5 catalyst zones, the temperature of the last catalyst zone being about 800 to 1000 °C, in particular about 850 to 1000 °C.

5. The method according to any of claims 1 to 4, comprising feeding the carbon dioxide containing gas into a carbon bed reaction zone at a temperature of 850 to 1000 °C, and optionally withdrawing carbon monoxide containing gas from the carbon bed reaction zone at a temperature of about 750 to 900 °C.

6. The method according to any of claims 1 to 4, comprising increasing the temperature of the carbon dioxide containing gas to about 1400 to 1600 °C, for example by oxygen combustion, in order to achieve thermal reforming of the gas composition before feeding it into the carbon bed reaction zone, and optionally withdrawing carbon monoxide containing gas from the carbon bed reaction zone at a temperature of about 750 to 900 °C.

7. The method according to any of claims 1 to 6, wherein carbon dioxide is converted into carbon monoxide in the presence of H₂O, the following reactions taking place in the carbon bed reaction zone:
C + CO₂ → 2 CO
C + H₂O → CO + H₂

8. The method according to any of the preceding claims, wherein the carbon bed reaction zone comprises a reactor which has a reaction bed formed by pulverized or granular carbon.

9. The method according to any of the preceding claims, wherein the carbon of the carbon bed reaction zone is derived from non-fossil raw-material, preferably the carbon is derived from biomass, such as annual or perennial plants, in particular from wood, and optionally the carbon of the carbon bed reaction zone is derived from a non-fossil raw-material by the torrefaction reaction, or from charcoal from a pyrolysis reaction.

10. The method according to claim 9 or 10, wherein at least a part of the carbon of the carbon bed reaction zone is derived from the carbon solids entrained in the syngas withdrawn from the gasifier, and optionally
- the carbon solids entrained in the syngas are fed into the carbon bed reaction zone together with the syngas, or
- the carbon solids being separated from the syngas after the gasifier and fed separately into the carbon bed reaction zone.

11. The method according to any of the preceding claims, wherein the carbon bed reaction zone comprises a bubbling bed reactor, a fluidized bed reactor or a circulating fluidized bed reactor.

12. The method according to any of the preceding claims, comprising
- converting at least 10 vol-%, preferably 15 to 100 vol-%, of the carbon dioxide of the syngas to carbon monoxide; and/or
- reducing the carbon dioxide content of the gas fed into the carbon bed reaction zone by at least 5 %, preferably by at least 7 %, in particular by 10 % by volume or more.

13. The method according to any of the preceding claims, wherein at least some of the carbon dioxide gas fed into the carbon bed reaction zone is derived from a water gas shift reaction.

14. The method according to any of the preceding claims, comprising increasing the molar ratio of hydrogen to carbon monoxide of a gas stream, which has been subjected to a reduction of carbon dioxide in a carbon bed reaction zone, to a value in the range of about 1.5 to 2.3.

15. The method according to any of the preceding claims, comprising reacting at least a part of the carbon dioxide remaining after the carbon bed reaction zone with external hydrogen in order to increase the carbon monoxide content.

16. The method according to claim 14 or 15, comprising
- increasing the hydrogen-to-carbon monoxide molar ratio of the syngas to about 2; feeding the gas thus obtained into a Fischer-Tropsch reaction zone; and converting in the Fischer-Tropsch reactor at least a significant part of the carbon monoxide and hydrogen contained in the syngas into a hydrocarbon composition containing C₄-C₉₀ hydrocarbons; or
- utilizing the gas, which has been subjected to a reduction of carbon dioxide concentration in a carbon bed reaction zone, to methanol synthesis or hydroformulation.

17. The method according to any of the preceding claims, wherein the feed of the carbon bed reaction zone is selected from the group of syngas obtained directly from gasification; syngas which has been reformed; and a combined gas stream comprising syngas and an industrial gas stream formed by carbon dioxide, in particular a carbon dioxide containing stream produced by a process associated with or carried out in conjunction with the process chain for producing and treating syngas.
